# EUROPÄISCHE PATENTSCHRIFT

(11) **EP 1 736 683 B1**
(45) Veröffentlichungstag und Bekanntmachung des Hinweises auf die Patenterteilung: **23.09.2009**
(21) Anmeldenummer: 06114293.1
(22) Anmeldetag: 22.05.2006
(51) Int. Cl.: F16F 9/04

(54) **Schlauchrollbalgluftfeder**
Tubular air bellow pneumatic springs
Amortisseurs pneumatiques a soufflet tubulaire

(30) Priorität: 21.06.2005 DE 102005028564
(43) Veröffentlichungstag der Anmeldung: 27.12.2006
(73) Patentinhaber: ContiTech Luftfedersysteme GmbH, 30165 Hannover (DE)
(72) Erfinder: Möllenbruck, Bernd, 30659, Hannover (DE)
(74) Vertreter: Finger, Karsten

(56) Entgegenhaltungen:
- EP-B1- 0 123 171
- EP-B1- 0 444 321
- EP-B1- 1 259 743
- DE-A1- 4 118 577
- DE-B- 1 078 882
- DE-B- 1 232 793
- US-A- 5 005 808
- US-A- 6 036 180

## Beschreibung

Die Erfindung betrifft eine Rollbalg-Luftfeder mit einem Schlauchrollbalg aus elastomerem Werkstoff, der mindestens einen kernlosen Endabschnitt aufweist, der an mindestens einer Armatur mit mindestens einer Öffnung durch Einspannen zwischen der Armatur und mindestens einem Spannstück befestigbar ist, wobei Armatur und Spannstück zusammenwirkende konische Einspannflächen aufweisen, das konische Spannstück in der Armatur unter Bildung eines veränderbaren Einspannspaltes axial verschiebbar angeordnet ist und der Querschnitt des eingespannten Endabschnittes durch das Spannstück luftdicht abschließbar ist (siehe EP-B-0 123 171).

Schlauchrollbalgluftfedern sind an sich bekannt. Sie unterscheiden sich von ebenfalls bekannten Rollbalgluftfedern im Wesentlichen durch die Art des Balges und der Befestigung des Balges an die anschließenden Armaturen.

Zylindrische oder konische Schlauchrollbälge werden für Luftfederungen für Fahrwerk, Fahrerhaus und Sitze in Straßenfahrzeugen sowie als Aktuatoren verwendet. Sie sind in Form eines aus elastomeren Werkstoffen mit Verstärkungseinlagen bestehenden, hohlzylindrischen oder -konischen Schlauchkörpers hergestellt. Die Endabschnitte dieses, einen Schlauchrollbalg darstellenden Schlauchkörpers müssen an den relativ zueinander beweglichen Halteelementen der gegeneinander abgefederten Fahrzeugteile befestigt werden.

Rollbälge weisen im Endbereich Wülste auf, die meist einen Kern aufweisen. Als Kern wird hier meist eine torusförmige Verstärkung aus Metall oder Kunststoff des oder der Endbereiche von Rollbälgen bezeichnet, wobei eine oder mehrere in die Balgwand eingebettete Verstärkungslagen um den Kern herumgeführt sein können. Durch die Kerne und die umgeschlagenen Verstärkungslagen ergibt sich meist eine deutliche Verdickung der Endbereiche der Rollbälge, so dass eine angepasste Befestigungstechnik für derartige Bälge notwendig ist. Auch ist die Art der Herstellung wesentlich aufwendiger, da das Einlegen der Kerne und das Führen der Verstärkungslagen um die Kerne herum zusätzliche Arbeitsmittel und Schritte bedingt. Derartige Luftfedern sind beispielsweise in der DE 1 285 792 A oder der DE 1 842 142 U offenbart.

In der DE 1 232 793 ist eine Luftfeder offenbart, die durch zusätzliche harte Gummischichten und Kerne aus kurzen Kabelstücken verdickte Endbereiche aufweist, wobei diese Endbereiche durch eine zu den Balgenden hin dicker werdende Konusform gekennzeichnet sind. Die Einspannung erfolgt hier durch konische Spannstücke, die durch die verdickten Endbereiche des Balges mitnehmbar sind und die verdickten Endbereiche dadurch in jeweils einem korrespondierenden konischen Spalt verklemmbar sind.

Derartige Bälge können beispielsweise durch Umbördeln des Randes metallischer Platten an den Armaturen befestigt sein.

Diese Vorgehensweise ist bei Schlauchrollbälgen nicht vorgesehen, da die Schlauchrollbälge Endabschnitte vorweisen, die keine Verdickungen in den Endabschnitten, sondern meist glattzylindrische Endbereiche ohne Kern aufweisen. Dies ermöglicht eine einfache und kostengünstige Herstellung, in dem die Bälge von einem schlauchartigen Vormaterial durch einfaches Abschneiden der Bälge in vorbestimmter Länge herstellbar sind.

Daher haben sich im Allgemeinen metallische Spannringe bewährt. Um eine sichere Einspannung bei hohen Zugkräften zu erreichen, wird der Spannring durch plastisches Verformen fest aufgebracht. Ein zu starkes oder zu schwaches Pressen durch den Spannring auf den Endabschnitt kann aber nachteilig sein, da es im ersten Fall zu einer Beschädigung des elastomeren Werkstoffs und der Festigkeitsträgerlage und im zweiten Fall zu einem Versagen der Klemmverbindung unter Druck kommen kann. Die Spannringe verursachen nicht unerhebliche Kosten und bei einer Korrosionsschutzbehandlung der Spannringe, die häufig Cr enthält, auch Umweltbelastungen. Eine Beschädigung der Befestigungsarmaturen kann ebenfalls nicht ausgeschlossen werden. Außerdem sind zum Verklemmen geeignete Vorrichtungen notwendig.

Aus der EP 0 123 171 B1 ist eine Luftfeder bekannt, die einen kernlosen Luftfederbalg aufweist, der mit seinem unteren Ende an einer Armatur durch ein verschraubbares Spannstück eingespannt ist. Das Spannstück weist einen zentrischen Gewindeansatz auf, der ein Trägerteil durchdringt und mit einer Gegenmutter gegen dieses gezogen wird. Die Armatur wird durch das mit der Gewindemutter angezogene Spannstück gegen das Trägerteil gehalten. Eine zu starke Verschraubung des Spannstückes birgt die Gefahr, dass der eingespannte Endabschnitt des Luftfederbalges beschädigt wird, eine zu schwache, dass der Balg unter Druck aus der Verklemmung rutscht.

Die EP 0 444 321 B1 zeigt eine Rollbalg ― Luftfeder, bei der ein Spannstück durch den im Inneren der Luftfeder herrschenden Innendruck gegen eine Armatur gepresst ist und der Luftfederbalg zwischen der Armatur und dem Spannstück luftdicht eingeklemmt ist.

Die EP 1 259 743 B1 zeigt ähnliche Anordnungen, wobei hier das Spannstück ringförmig ausgebildet ist. Die EP 1 259 743 B1 zeigt verschiedene Ausführungen des Spannstückes mit und ohne formschlüssiger Verbindung mit der Armatur.

Das Wirkprinzip der EP 0444 321 B1 und der EP 1 259 743 B1 ist jedoch gleich, da bei den Spannstücken die zur Verklemmung des Balges notwendige Kraft aus dem Innendruck in der Luftfeder resultiert. Diese Lösungen haben den Nachteil, dass in drucklosem Zustand, beispielsweise während eines drucklosen Transportes oder der Lagerung der unverbauten Luftfeder der Balg zwischen der Armatur und dem Spannstück herausgleiten kann, da mangels Druck keine Klemmkraft vorhanden ist. Um dies zu verhindern, ist in der EP 444 321 B1 eine zusätzliche Sicherung in Form einer Schraub- oder Klemmverbindung zwischen Spannstück und Armatur vorgesehen. In der EP 1 259 743 B1 übernimmt diese Funktion ein Formschluss zwischen Armatur und Spannstück.

Ein weiterer Nachteil der geschilderten Lösungen ist, dass der Balg nur bei eingebauter oder zumindest in seiner Längenausdehnung begrenzter Luftfeder zuverlässig zwischen Armatur und Spannelement einklemmbar ist. Wird der Innendruck ohne diese Begrenzung aufgebracht, löst sich die Verklemmung zwischen Armatur und Spannelement, da die Zugkraft im Balg dann größer wird als die Haltekraft in der Klemmung.

Der Erfindung liegt die Aufgabe zugrunde, eine Luftfeder der eingangs geschilderten Art zu schaffen, bei der der Schlauchrollbalg auch ohne Innendruck und/oder ohne Begrenzung der axialen Längenausdehnung zwischen der Armatur und dem Spannstück zuverlässig eingeklemmt ist, ohne dass dazu zusätzliche Verschraubungen, Verklemmungen etc. erforderlich sind.

Diese Aufgabe wird dadurch gelöst,
dass der jeweils kleinste Durchmesser der zusammenwirkenden konischen Einspannflächen von Armatur und Spannstück an der jeweils dem Schlauchrollbalg zugewandten Seite von Armatur und Spannstück angeordnet ist, wobei der größte Durchmesser des Spannstückes kleiner ist als der kleinste Durchmesser der Armatur und die Differenz dieser Durchmesser einen Spalt bilden, der kleiner ist als die Wanddicke des Schlauchrollbalges und, dass die Armatur einen von dem balgseitigen Ende der Öffnung beabstandeten Anschlag aufweist, wobei der Abstand zwischen dem balgseitigen Ende der Öffnung und dem Anschlag so bemessen ist, dass bei vollständig am Anschlag anliegendem Spannstück der Schlauchrollbalg in den Spalt zwischen Spannstück und Armatur einführbar ist.

Durch diese Anordnung ergibt sich der Vorteil, dass durch den in den Einspannspalt zwischen Armatur und Spannstück eingeführten Schlauchrollbalg bei Zugbelastung des Schlauchrollbalges in Richtung aus der Armatur heraus der Einspannspalt zwischen Armatur und Spannstück verkleinert wird, da das in diesem Spannstück zugeordneten Ende steckende Spannstück durch den Schlauchrollbalg mitgezogen wird. Dadurch wird der Schlauchrollbalg zwischen der Armatur und dem Spannstück luftdicht eingespannt. Im Gegensatz dazu wird der Einspannspalt bei Zugbelastung im Schlauchrollbalg nach dem bisher bekannten Stand der Technik größer. Es bedarf also bei der erfindungsgemäßen Lösung keiner weiteren Sicherung wie beispielsweise einer Verschraubung oder formschlüssiger Verriegelungen.

Auch die Montage ist sehr einfach, da der Schlauchrollbalg mit seinem vorgesehenen Ende in die Öffnung der Armatur eingeschoben wird und sich aufgrund seiner Eigensteifigkeit über das am Anschlag anliegende Spannstück schiebt. Der Schlauchrollbalg weitet sich dabei leicht auf und hält das Spannstück im Endabschnitt des Schlauchrollbalges aufgrund der Elastizität des Schlauchrollbalges und der zwischen Schlauchrollbalg und Spannstück auftretenden Haftreibung fest, so dass es bei Relativbewegungen des Schlauchrollbalges gegen die Armatur mit dem Schlauchrollbalg mitgenommen wird.

In einer weiteren Ausbildung der Erfindung weist die der Schlauchrollbalg-Innenwand zugewandte Einspannfläche des Spannstückes mindestens einen widerhakenförmigen, nach außen weisenden ringförmigen Ansatz auf.

Diese Ansätze, die vorteilhafterweise in Einsteckrichtung des Schlauchrollbalges angeschrägt sind, krallen sich bereits bei beginnender Relativbewegung des Schlauchrollbalges gegen das Spannstück entgegen der Einsteckrichtung des Schlauchrollbalges in die Innenwand des Schlauchrollbalges und verhindern so, dass der Schlauchrollbalg vom Spannstück unbeabsichtigt abrutscht.

Die erfindungsgemäße Anordnung schafft eine Luftfeder, die ohne eine Begrenzung der axialen Länge, d.h. Ohne feste Einspannung mit Druck beaufschlagbar ist. Dadurch führt auch ein frühes Füllen der Luftfeder bei der Montage in ein Fahrzeug nicht zur Zerstörung der Luftfeder. Dadurch kann die Montage teilweise sehr erleichtert und Faltenbildung des Schlauchrollbalges vermieden werden. Die Luftfeder bleibt auch während des Transportes und der Lagerung in komplettiertem Zustand. Damit ist insgesamt eine höhere Sicherheit gegen Versagen gegeben.

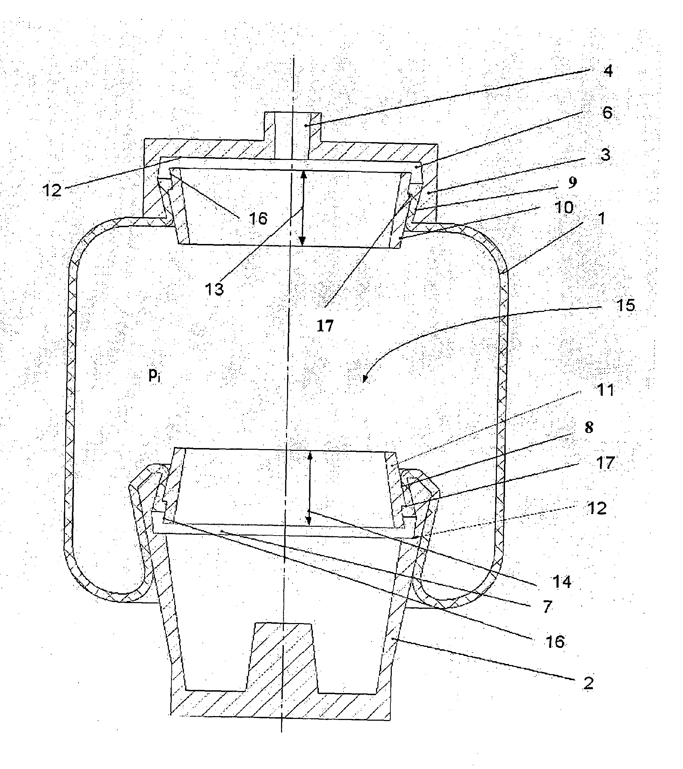

Anhand der Zeichnung wird nachstehend ein Beispiel der Erfindung näher erläutert. Die in Fig. 1 im Betriebszustand als Längsschnitt gezeigte Luftfeder weist einen Schlauchrollbalg 1, einen Abrollkolben 2 und eine Anschlussarmatur 3 mit einem Luftanschluss 4 auf. Der Kolben 2 und die Armatur 3 sind jeweils an hier nicht näher gezeigten Teilen von Karosserie, Fahrerhaus oder Sitz eines Kraftfahrzeugs befestigt. Sowohl der Kolben 2 als auch die Armatur 3 weisen jeweils eine Öffnung 6, 7 auf. Diese Öffnungen 6, 7 weisen an den dem Schlauchrollbalg zugewandten Enden mindestens teilweise konische Innenwandungen 8, 9 auf. Die Enden des Schlauchrollbalges 1 ragen jeweils in den Hohlraum 6 der Armatur 3 und in den Hohlraum 7 des Kolbens 2 hinein und sind über Spannstücke 10 und 11 geschoben. Dabei sind die Enden des Schlauchrollbalges 1 leicht aufgeweitet und halten die Spannstücke 10, 11 fest. Die Außenflächen der Spannstücke 10, 11 korrespondieren in ihrer Konizität mit den Wandungen 8 und 9 von Armatur 3 und Kolben 2 und sind so ausgebildet, dass der jeweils kleinste Durchmesser der Öffnungen 6, 7 an dem jeweiligen dem Schlauchrollbalg zugewandten Ende der Öffnungen 6, 7 angeordnet ist. Der jeweils größte Durchmesser der Spannstücke 10, 11 ist kleiner als der jeweils kleinste Durchmesser der Armatur 3 bzw. des Kolbens 2, so dass die Spannstücke 10, 11 in die Öffnungen 6, 7 der Armatur 3 bzw. des Kolbens 2 einschiebbar sind. Der minimal zwischen diesen Durchmessern auftretende Spalt ist kleiner als die Wanddicke des Schlauchrollbalges 1. Damit ist sichergestellt, dass bei auf die Spannstücke 10, 11 aufgestülptem Schlauchrollbalg dieser nicht mehr aus den Öffnungen 6, 7 herausgleiten kann.

Die Armatur 3 und der Kolben 2 weisen jeweils einen vom balgseitigen Ende beabstandeten Anschlag auf, wobei der Abstand der Anschläge 12 von dem jeweiligen Ende der Öffnungen 6, 7 größer ist, als die Höhen 13 und 14 der Spannstücke 10 und 11. Dadurch haben die zunächst ohne aufgestülpten Schlauchrollbalg 1 in die Öffnungen 6, 7 eingeführten Spannstücke 10, 11 axiales Spiel, welches einen ringförmigen Spalt zwischen den konischen Wandungen 8, 9 der Öffnungen 6, 7 und den Außenflächen der Spannstücke 10, 11 bewirkt. Der Schlauchrollbalg ist mit seinem jeweiligen Ende in jeweils einen dieser Spalte einführbar. Die axiale Eigensteifigkeit des Schlauchrollbalges 1 reicht aus, um diesen über die jeweiligen Spannstücke zu schieben, wobei der Schlauchrollbalg 1 jeweils leicht aufgeweitet wird und aufgrund der Elastizität des Schlauchrollbalges die Spannstücke 10, 11 im jeweiligen Schlauchrollbalgende stecken bleiben.

Im Betriebszustand herrscht im Inneren 15 der Luftfeder ein Innendruck pi, der größer ist als der Außendruck pₐ. Dadurch vergrößert der Schlauchrollbalg 1 seinen ursprünglichen Durchmesser und erhält die gezeigte aufgeblähte Form. Durch die Vergrößerung des Durchmessers entsteht im Schlauchrollbalg 1 eine Zugkraft, die dazu führt, dass der Schlauchrollbalg 1 aus den Öffnungen 6, 7 der Armatur 3 bzw. des Kolbens 2 herausgezogen wird. Dadurch werden die Spannstücke 10, 11 mit in Richtung auf das balgseitige Ende der Öffnungen 6, 7 gezogen und klemmen den Schlauchrollbalg 1 dabei zwischen den Außenflächen der Spannstücke 10, 11 und den konischen Wandungen 8, 9 von Armatur 3 bzw. Kolben 2 luftdicht ein.

Die Außenflächen der Spannstücke 10, 11 weisen zur Verbesserung der Haftung zwischen Spannstücken 10, 11 und dem Schlauchrollbalg 1 jeweils eine Ringnut 16 auf, deren dem balgseitigen Ende zugewandte Kante 17 widerhakenförmig ausgebildet ist. Dadurch ist die Sicherheit, dass die Spannstücke 10, 11 fest im jeweiligen Schlauchrollbalgende stecken bleiben verbessert.

Dieser Effekt tritt auch bei nicht durch Innendruck bewirkte Zugkräften im Schlauchrollbalg 1 ein. Damit bleibt die Luftfeder auch ohne äußere Einspannung komplett.

### Bezugszeichenliste

### (Teil der Beschreibung)

- 1: Schlauchrollbalg
- 2: Abrollkolben
- 3: Armatur
- 4: Luftanschluss
- 6: Öffnung der Armatur 3
- 7: Öffnung des Kolbens 2
- 8: konische Innenwandung der Armatur 3
- 9: konische Innenwandung des Kolbens 2
- 10: Spannstück in Armatur 3
- 11: Spannstück im Kolben 2
- 12: Anschläge
- 13: Höhe des Spannstückes 10
- 14: Höhe des Spannstückes 11
- 15: Luftfederinnenraum
- 16: Ringnut der Spannstücke 10, 11
- 17: widerhakenförmige Kante der Ringnuten 16

## Patentansprüche

1. Rollbalg-Luftfeder mit einem Schlauchrollbalg (1) aus elastomerem Werkstoff, der mindestens einen kernlosen Endabschnitt aufweist, der an mindestens einer Armatur (2,3) mit mindestens einer Öffnung (6, 7) durch Einspannen zwischen der Armatur (2, 3) und mindestens einem Spannstück (10, 11) befestigbar ist, wobei Armatur (2,3) und Spannstück (10, 11) zusammenwirkende konische Einspannflächen (8, 9) aufweisen, das konische Spannstück (10, 11) in der Armatur (2, 3) unter Bildung eines veränderbaren Einspannspaltes axial verschiebbar angeordnet ist und der Querschnitt des eingespannten Endabschnittes durch das Spannstück (10, 11) luftdicht abschließbar ist, **dadurch gekennzeichnet,**
**dass** der jeweils kleinste Durchmesser der zusammenwirkenden konischen Einspannflächen (8, 9) von Armatur (2, 3) und Spannstück (10, 11) an der jeweils dem Schlauchrollbalg (1) zugewandten Seite von Armatur (2, 3) und Spannstück (10, 11) angeordnet ist, wobei der größte Durchmesser des Spannstückes (10, 11) kleiner ist als der kleinste Durchmesser der Armatur (2, 3) und die Differenz dieser Durchmesser einen Spalt bilden, der kleiner ist als die Wanddicke des Schlauchrollbalges (1) und,
**dass** die Armatur (2, 3) einen von dem balgseitigen Ende der Öffnung (6, 7) beabstandeten Anschlag (12) aufweist, wobei der Abstand zwischen dem balgseitigen Ende der Öffnung (6, 7) und dem Anschlag (12) so bemessen ist, dass bei vollständig am Anschlag (12) anliegendem Spannstück (10, 11) der Schlauchrollbalg (1) in den Spalt zwischen Spannstück (10, 11) und Armatur (2, 3) einführbar ist.

2. Rollbalg-Luftfeder nach Anspruch 1, **dadurch gekennzeichnet, dass** die der Schlauchrollbalg-Innenwand zugewandte Einspannfläche des Spannstückes (10, 11) mindestens einen widerhakenförmigen, nach außen weisenden ringförmigen Ansatz (17) aufweist.

## Claims

1. Bellows-type pneumatic spring with a tubular bellows (1) consisting of elastomeric material, which has at least one coreless end portion which is fastenable to at least one fitting (2, 3) having at least one orifice (6, 7) by clamping between the fitting (2, 3) and at least one tension piece (10, 11), the fitting (2, 3) and tension piece (10, 11) having cooperating conical clamping faces (8, 9), the conical tension piece (10, 11) being arranged in the fitting (2, 3) so as to be axially displaceable so as to form a variable clamping gap, and the cross section of the clamped end portion being capable of being closed off, air-tight, by means of the tension piece (10, 11), **characterized in that** the in each case smallest diameter of the cooperating conical clamping faces (8, 9) of the fitting (2, 3) and of the tension piece (10, 11) is arranged in each case on that side of the fitting (2, 3) and of the tension piece (10, 11) which faces the tubular bellows (1), the largest diameter of the tension piece (10, 11) being smaller than the smallest diameter of the fitting (2, 3), and the difference between these diameters forming a gap which is smaller than the wall thickness of the tubular bellows (1), and **in that** the fitting (2, 3) has a stop (12) spaced apart from the bellows-side end of the orifice (6, 7), the spacing between the bellows-side end of the orifice (6, 7) and the stop (12) being dimensioned such that, with the tension piece (10, 11) bearing completely against the stop (12), the tubular bellows (1) is introduceable into the gap between the tension piece (10, 11) and the fitting (2, 3).

2. Bellows-type pneumatic spring according to Claim 1, **characterized in that** the clamping face of the tension piece (10, 11), the said clamping face facing the inner wall of the tubular bellows, has at least one barb-shaped annular extension (17) pointing outwards.

## Revendications

1. Amortisseur pneumatique à soufflet avec un soufflet tubulaire (1) en matériau élastomère, qui présente au moins une portion d'extrémité sans noyau qui peut être fixée à au moins une armature (2, 3) avec au moins une ouverture (6, 7) par serrage entre l'armature (2, 3) et au moins une pièce de serrage (10, 11), l'armature (2, 3) et la pièce de serrage (10, 11) présentant des surfaces de serrage coniques coopérantes (8, 9), la pièce de serrage conique (10, 11) étant disposée de manière déplaçable axialement dans l'armature (2, 3) en formant une fente de serrage variable et la section transversale de la portion d'extrémité serrée pouvant être fermée de manière étanche à l'air par la pièce de serrage (10, 11), **caractérisé en ce qu'**à chaque fois le plus petit diamètre des surfaces de serrage coniques coopérantes (8, 9) de l'armature (2, 3) et de la pièce de serrage (10, 11) est disposé sur le côté de l'armature (2, 3) et de la pièce de serrage (10, 11) tourné à chaque fois vers le soufflet tubulaire (1), le plus grand diamètre de la pièce de serrage (10, 11) étant inférieur au plus petit diamètre de l'armature (2, 3) et la différence de ces diamètres formant une fente, qui est inférieure à l'épaisseur de paroi du soufflet tubulaire (1) et **en ce que** l'armature (2, 3) présente une butée (12) espacée de l'extrémité de l'ouverture (6, 7) du côté du soufflet, la distance entre l'extrémité de l'ouverture (6, 7) du côté du soufflet et la butée (12) étant dimensionnée de telle sorte que lorsque la pièce de serrage (10, 11) s'applique complètement contre la butée (12), le soufflet tubulaire (1) peut être introduit dans la fente entre la pièce de serrage (10, 11) et l'armature (2, 3).

2. Amortisseur pneumatique à soufflet selon la revendication 1, **caractérisé en ce que** la surface de serrage de la pièce de serrage (10, 11) tournée vers la paroi interne du soufflet tubulaire présente au moins un épaulement (17) de forme annulaire tourné vers l'extérieur, en forme de barbe.
